# EUROPEAN PATENT APPLICATION

(11) **EP 4 509 457 A1**
(43) Date of publication of application: **19.02.2025**
(21) Application number: 24192015.6
(22) Date of filing: 31.07.2024
(51) Int. Cl.: B66F 9/075, H01M 50/249, B60K 1/04, B60L 50/60

(54) **BATTERY AND BALLAST HOUSING FOR FORKLIFT TRUCKS**

(30) Priority: 17.08.2023 IT 202300017355
(71) Applicant: Rigam Engineering S.r.l. (Società Unipersonale), 22074 Lomazzo (CO) (IT)
(72) Inventor: Casalino, Massimo, I-22040 Alzate Brianza (CO) (IT)
(74) Representative: De Bortoli, Tiziano

(57) **Abstract**

Battery and ballast housing (10) for forklift trucks which comprises a containment structure (1) of substantially parallelepiped shape housing therein a ballast (2) and one or more electric batteries (5) suitable for powering a forklift truck. The containment structure (1) in turn comprises a lower portion in which said ballast (2) is positioned and an upper portion in which a containment tank (4) of said one or more batteries (5) is positioned. The ballast (2) comprises a material selected from:
- metal processing waste materials, preferably metal processing chips and/or welding scraps and/or general metal scrap, compressed or uncompressed; and
- semi-finished metal products, preferably metal billets or slabs.

## Description

The present invention relates to the field of forklift trucks and in particular to the counterweight such vehicles are provided with to counteract the weight they have to lift. More in particular, the present invention relates to a housing which can be positioned on a forklift truck in which a ballast is contained and in which one or more electric batteries suitable for powering said forklift truck are housed.

As is known, batteries for forklift trucks are normally housed in housings, generally made of metal, which are then mounted on board the forklift truck itself. The dimensions of such housings are standardized so that they can be used on various forklift truck models.

Until recently, the batteries used to power the forklift trucks were lead batteries which, as is known, are relatively bulky and heavy. In practice, until today, thanks to the weight of the batteries themselves, the batteries in forklift trucks had a dual function, namely: to electrically power the forklift truck; to act as a counterweight to counteract the weight which has to be lifted, thanks to the considerable weight of the batteries themselves.

The evolution of technology has meant that it is more convenient and efficient, from the point of view of the forklift truck's electrical power supply, to replace lead batteries with new generation, lighter, smaller batteries with greater performance from an electrical point of view (lithium batteries, lithium-ion batteries, and the like).

If these new batteries bring indisputable advantages as far as the electrical power supply is concerned, they however have the disadvantage of being lighter with respect to lead batteries, thus eliminating, or in any case limiting, the counterweight function carried out by the lead batteries.

To ensure the stability and balance of the forklift, it is therefore necessary to add a ballast which allows the housing to reach the minimum weight required to also carry out the function of counterweight in addition to that of containing the battery pack.

Since the new batteries are smaller in size with respect to the lead batteries, a free space became available inside the containment housings in which it is possible to add a heavy material acting as a ballast to ensure the minimum weight required.

A quick calculation leads to the conclusion that the material with which the available space has to be filled must have a specific weight > 5kg/dm³ so as to ensure reaching the minimum weight required.

At the same time, however, the material must have a cost which is as low as possible, as this addition of ballast to the housing turns out to be an additional cost with respect to the previous situation.

Regarding the materials to be used as ballast, various solutions have been proposed with materials of the most different kinds, from concrete to various kinds of metallic materials, comprising or not comprising binders and compacting agents, and possibly suitably shaped, none of which, however, can be considered fully satisfactory in terms of costs and implementation complexity.

Furthermore, as mentioned above, the battery housings have standardized dimensions. Since the new batteries are less bulky with respect to traditional lead batteries, it has become necessary to use fixed or removable containment shims between the housing and the battery pack to fix the batteries to the housing and avoid movements during the transport and use of the forklift truck.

Basically, in the solutions proposed or adopted so far, various components are positioned inside the housing in a more or less orderly manner (for example: ballast possibly with fixing and containment systems; batteries possibly with a support plane; battery containment shims; electronics possibly with related support plane; cover) which have to be screwed or otherwise fixed, with an increase in assembly costs and times.

It would therefore be desirable to have a housing in which a ballast is contained and in which one or more electric batteries are housed which are suitable for powering a forklift truck, which can be positioned on a forklift truck and which is capable of overcoming the problems associated with the known battery and counterweight housings.

An object of the present invention is therefore to provide a battery and ballast housing for forklift trucks, in which the various components are arranged in an optimal manner.

A further object of the present invention is to provide a battery and ballast housing for forklift trucks, in which the ballast is made of relatively inexpensive materials, while ensuring the achievement of a minimum weight for stabilizing the forklift truck.

Yet another object of the present invention is to provide a battery and ballast housing for forklift trucks, in which the positioning of the various components does not require burdensome work in terms of time and costs.

Another object of the present invention is to provide a battery and ballast housing for forklift trucks, which allows easy maintenance and replacement of the components, in particular the batteries.

Yet another object of the present invention is to provide a battery and ballast housing for forklift trucks, which has dimensional characteristics suited to the standard solutions adopted in forklift trucks.

Not least, an object of the present invention is to provide a battery and ballast housing for forklift trucks, which has a simple structure, is relatively easy to implement in practice, safe to use and effective in operation, as well as can be manufactured easily and at competitive costs. In a further aspect, it is also an object of the present invention to provide a forklift truck having a battery and ballast housing with improved characteristics.

The aforesaid and other objects and advantages, as will appear from the following description, are achieved by means of a battery and ballast housing for forklift trucks which comprises a substantially parallelepiped-shaped containment structure housing therein a ballast and one or more electric batteries suitable for powering a forklift truck.

The battery and ballast housing for forklift trucks of the present invention is characterized in that said containment structure comprises a lower portion in which said ballast is positioned and an upper portion in which a containment tank for said one or more batteries is positioned. The battery and ballast housing for forklift trucks of the present invention is further characterized in that said ballast comprises a material selected from metal processing waste materials, preferably metal processing chips and/or welding scraps and/or general metal scrap, compressed or uncompressed, and/or semi-finished metal products, preferably metal billets or slabs.

A battery and ballast housing for forklift trucks is thereby provided which satisfies the above-mentioned objects.

In practice, in the battery and ballast housing for forklift trucks of the present invention, the ballast substantially consists of metal, in particular ferrous, waste, such as for example metal processing chips, welding scraps, general metal scrap, and similar materials, which have the advantage of having relatively low costs and a relatively high weight, thus allowing to have a ballast which performs its tasks with relatively low costs.

Such metal waste can be used either in loose form or compressed and compacted, possibly using binding agents adapted to give the metal mass a stable shape.

Additionally or alternatively, the ballast can substantially consist of semi-finished products such as billets or slabs. As is known, billets and slabs are semi-finished products, i.e., intermediate raw products, which are obtained by means of casting processes or by means of the roughing mill, and which are intended for subsequent processing such as rolling or other processes. Such semi-finished products, being raw and unfinished products, have a relatively low cost and have the advantage of being able to be stacked, or in any case neatly arranged, so as to have a stable positioning inside the housing and possibly to provide a stable and uniform support surface for the tank containing the forklift's power supply batteries.

Furthermore, the particular arrangement of the components, and in particular of the batteries, inside the containment tank allows - as better described below - the positioning of the various components inside the housing to be optimized, while at the same time limiting the assembly operations (fixing, welding, and the like) required by known solutions.

In fact, as better described below, the battery containment tank, the batteries themselves with the related control electronics, and the closing cover can be formed as a single assembly. From the point of view of assembly and maintenance, the operations are thus extremely simplified with respect to the known solutions.

In practice, the solution adopted allows the assembly described above to be obtained by inserting the batteries into the corresponding containment tank, carrying out the necessary wiring, closing with the lid, and then inserting everything into the housing, once the ballast has been positioned in the lower part thereof.

Likewise, if maintenance or replacement of the battery pack is necessary, it is sufficient to remove the battery containment tank from the housing and then to carry out any maintenance or replacement operations on one or more of the batteries.

Finally, it has also to mentioned that the battery containment tank can be suitably sized so as to contain the batteries, which are normally smaller in size with respect to lead batteries, without having to select the normally used containment thicknesses, whilst still ensuring the stability of the battery pack during the movement of the forklift.

For the purposes of the present invention, the terms "upper", "lower", "length", "width", "vertical", "horizontal", "side", and in general the relative geometric and dimensional terms used in the description and in the claims, are to be understood as referring to the normal operating conditions of the housing when positioned on the forklift truck.

In a preferred but non-limiting embodiment of the battery and ballast housing for forklift trucks, according to the present invention, said housing can optionally comprise a separation plane between said lower portion and said upper portion of said containment structure.

The separation plane can be useful if the ballast consists of metal scraps, such as chips, scrap, or other loose materials, so as to contain them and fix them in the lower portion of the containment structure, preventing displacements thereof during the movement of the forklift. The separation plane can also be useful as a support base for the battery containment tank, contributing to optimizing the distribution of mechanical loads in the housing.

Alternatively, and in particular in the case in which the ballast consists of suitably sized and shaped semi-finished products, such as metal billets or slabs, the separation plane can be omitted, because the stability of the ballast can be ensured by the orderly arrangement of said semi-finished products and by the positioning of the battery containment tank which, by blocking the ballast vertically, prevents displacements thereof due to jolts and vibrations of the forklift truck

In general, when present, the separation plane is advantageously fixed to the containment structure of the housing.

The fixing of the separation plane to the walls of the containment structure of the housing can be carried out in a reversible manner, for example by means of screws or similar systems, so as to allow the removal thereof if the underlying ballast is to be accessed.

The separation plane can be reversibly fixed, without the use of screws or the like, by blocking it between the ballast and the battery containment tank.

Alternatively, the separation plane can be irreversibly fixed to the side walls of the containment structure, for example by means of welding, once the ballast has been positioned in the lower portion of the containment structure.

In an embodiment of the battery and ballast housing for forklift trucks, according to the present invention, said tank containing said one or more batteries can advantageously comprise a lower region for housing said one or more batteries and an upper delimiting frame which runs along the entire perimeter of the containment tank.

In this case, advantageously, the containment tank of said one or more batteries can be shaped so that the lower region for housing the batteries has dimensions in length and width which are smaller than the corresponding dimensions in length and width of said upper delimiting frame. In practice, as better illustrated in the subsequent detailed description, in preferred but non-limiting embodiments of the battery and ballast housing for forklift trucks of the invention, the dimensions, in length and width, of the upper delimiting frame of the battery containment tank can be substantially equal to the corresponding internal dimensions, in length and width, of the upper portion of the containment structure of the housing.

At the same time, in the battery containment tank, the lower region thereof for housing said one or more batteries can have dimensions, in length and width, smaller than the corresponding dimensions, in length and width, of upper delimiting frame thereof.

In other words, in preferred but non-limiting embodiments of the invention, the battery containment tank can be made so that the upper delimiting frame of the tank advantageously has dimensions substantially equal to the internal dimensions, in length and width, of the containment structure of the housing (thus ensuring the stable placement of the tank inside the containment structure), while the lower region of the tank in which the batteries are housed advantageously has dimensions corresponding to the battery pack to be housed (thus ensuring the stable placement of the batteries inside the containment tank).

In general, in embodiments of the battery and ballast housing for forklift trucks, according to the present invention, a support plane of a control electronics of said one or more batteries can be advantageously provided.

From a construction point of view, according to particularly preferred but non-limiting embodiments of the battery and ballast housing for forklift trucks of the present invention, the upper delimiting frame of the battery containment tank can preferably comprise a horizontal plane which extends along the perimeter of the lower battery housing region perpendicularly to the walls of said lower region and externally thereto.

The upper delimiting frame of the containment tank further comprises a vertical plane which is perpendicular to said horizontal plane and is connected thereto along its extension.

Basically, the upper delimiting frame of the containment tank is configured so as to have a horizontal surface which cantilevers out from the upper edge of the lower battery housing region, and which is closed by a vertical part along its entire development.

In this case, advantageously, the support plane of the control electronics of said one or more batteries can be conveniently fixed to the horizontal plane of the upper delimiting frame of the battery containment tank.

In preferred but non-limiting embodiments of the battery and ballast housing for forklift trucks of the invention, it is possible to envisage the presence of reversible or irreversible fixing means for fixing the battery containment tank to the containment structure of the housing.

In particular, fixing means can be provided which allow the vertical plane of the upper delimiting frame of the battery containment tank to be reversibly or irreversibly connected in a stable manner to the side walls of the upper portion of the containment structure of the housing. In practice, in these preferred but non-limiting embodiments, the vertical plane of the upper delimiting frame of the battery containment tank adheres to the internal walls of the containment structure of the housing and is fixed to the housing by means of reversible systems, such as screws or similar means, or by non-reversible systems, such as rivets or welding or similar means.

In general embodiments of the battery and ballast housing for forklift trucks, according to the present invention, it is possible to envisage the presence of a closing cover, and in particular of a closing cover which is removably fixed to the battery containment tank, more in particular to an edge of the upper delimiting frame of the battery containment tank.

In a further aspect thereof, the present invention also relates to a forklift truck comprising a battery and ballast housing as described herein.

It is therefore clear that the battery and ballast housing for forklift trucks, according to the present invention, is provided with a series of features and advantages with respect to known housings. Further features and advantages of the present invention will become more apparent from the description of a preferred embodiment of a battery and ballast housing for forklift trucks, illustrated by way of non-limiting example in the accompanying Figures, in which:
- Figure 1 is a top view of an embodiment of a battery and ballast housing for forklift trucks, according to the present invention;
- Figure 2 is a sectional view along plane A-A in Figure 1 of an embodiment of a battery and ballast housing for forklift trucks, according to the present invention;
- Figure 3 is a sectional view along plane A-A in Figure 1 of a detail of an embodiment of a battery and ballast housing for forklift trucks, according to the present invention;
- Figure 4 is an exploded perspective view of an embodiment of a battery and ballast housing for forklift trucks, according to the present invention;
- Figure 5 is a perspective view of a component (battery housing tank) of an embodiment of a battery and ballast housing for forklift trucks, according to the present invention;
- Figure 6 is a sectional view of a component (battery housing tank) of an embodiment of a battery and ballast housing for forklift trucks, according to the present invention.

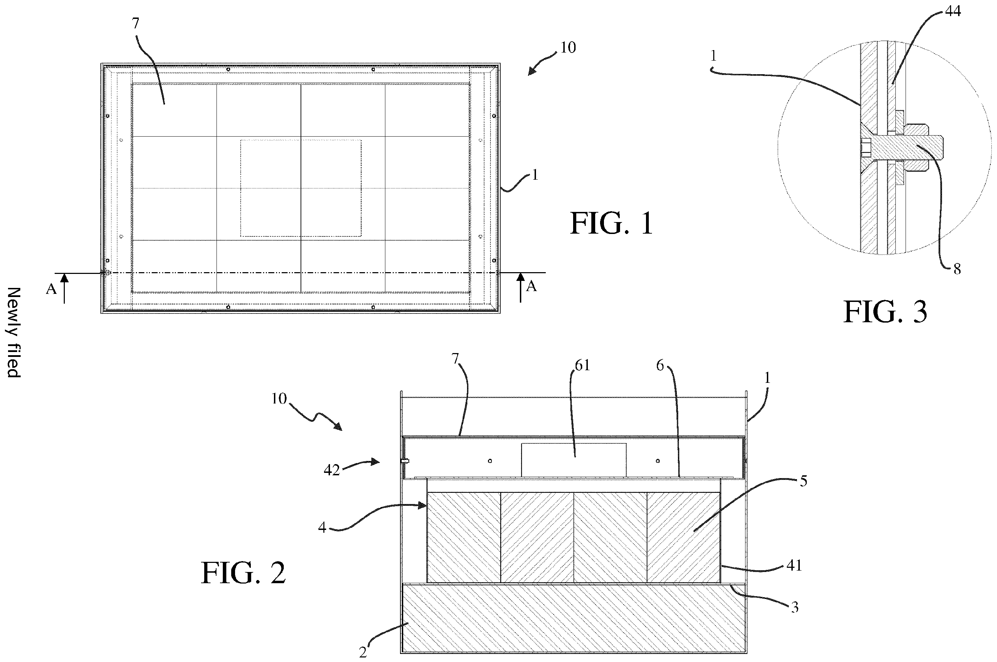

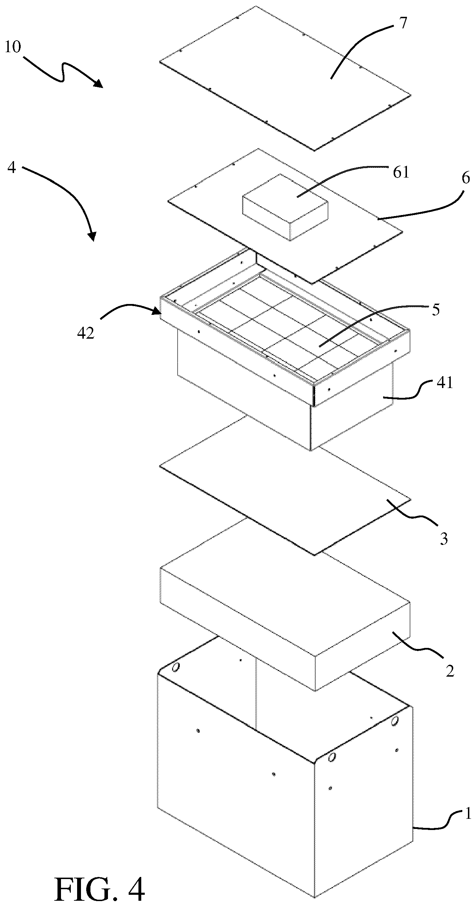

With reference to the attached figures, in particular to Figures 1-4, a general embodiment of the battery and ballast housing for forklift trucks of the invention, indicated by reference numeral 10, comprises a containment structure 1 of substantially parallelepiped shape and generally made of metal.

The containment structure 1 houses therein a ballast 2 and one or more electric batteries 5, generally a pack of batteries 5, which are suitable for powering a forklift truck.

The containment structure 1 is adapted to be mounted on a forklift truck to provide the electrical power required for the operation of the forklift truck and to carry out the function of counterweight according to known methodologies which will not be described in detail.

One of the distinctive features of the housing 10 for batteries 5 and ballast 2 of the invention lies in that said containment structure 1 comprises a lower portion in which said ballast 2 is positioned and an upper portion in which a containment tank 4 of the batteries 5 is positioned. In practice, in the housing 10 of the invention, the ballast 2 is positioned in the base of the housing, while the batteries 5, instead of being inserted individually directly into the housing 10 in a more or less orderly manner, are placed in a special containment tank 4 which is suitably sized.

Another distinctive feature of the housing 10 for batteries 5 and ballast 2 of the invention lies in that the ballast 2 comprises a material which is selected from metal processing waste materials, for example metal processing chips and/or welding scraps and/or general metal scrap and/or similar materials.

Such materials can be inserted into the base of the containment structure 1 in loose or compressed or compacted form, depending on their characteristics.

Alternatively or additionally, the material forming the ballast 2 can comprise semi-finished metal products, for example metal billets or slabs, of suitable shapes and sizes.

In practice, depending on the operating requirements (for example, weight of the ballast necessary to ensure the stability of the forklift; volume available inside the containment housing) and the costs of the material, it is possible to select the kind and amount of the most appropriate material among those listed and to arrange it inside the containment structure 1, at its base, to obtain a ballast 2 which satisfies the minimum weight requirements which the housing 10 must have with relatively low costs.

In the embodiment of the battery and ballast housing 10 of Figures 1-4 there is a separation plane 3, for example a metal plane, which separates the lower portion of the containment structure 1 from the upper portion of said containment structure 1. The presence of this separation plane 3 is optional and essentially depends on the kind of material used for the ballast 2 and on operating requirements.

For example, the separation plane 3 is generally used when the ballast 2 is formed by metal scrap or loose materials (chips, scraps, and the like) which are not compressed or compacted into a single mass, so as to contain and fix them in the lower portion of the containment structure 1, preventing the displacement of the ballast 2 during the movement of the forklift. Furthermore, the separation plane 3 can be useful as a uniform support base for the containment tank 4 of the batteries 5, so that its weight is properly distributed and uniformly discharged at the base of the housing 10.

As already mentioned, the separation plane 3 can also be omitted, for example in cases where the ballast is formed by semi-finished products, such as metal billets or slabs, which have shapes and dimensions such as to ensure the orderly and stable arrangement thereof inside the containment structure 1, thus forming a stable ballast 2 capable of providing a uniform support base for the containment tank 4 of the batteries 5.

The separation plane 3, if present, can be fixed in a reversible or irreversible manner to the containment structure 1 of the housing 10.

The reversible fixing, carried out for example with screws and similar fixing means, can be carried out when the possibility of replacing or modifying the weight and characteristics of the ballast 2 is envisaged, thus making it necessary to remove the separation plane 3 so as to be able to access the underlying ballast 2.

The separation plane 3 can be reversibly fixed without the use of screws or similar, by blocking it between the ballast 2 and the containment tank 4 of the batteries 5. Alternatively, the separation plane 3 can be irreversibly fixed to the side walls of the containment structure 1, for example by welding or riveting or similar fixing means, once the ballast 2 has been positioned in the lower portion of the containment structure 1.

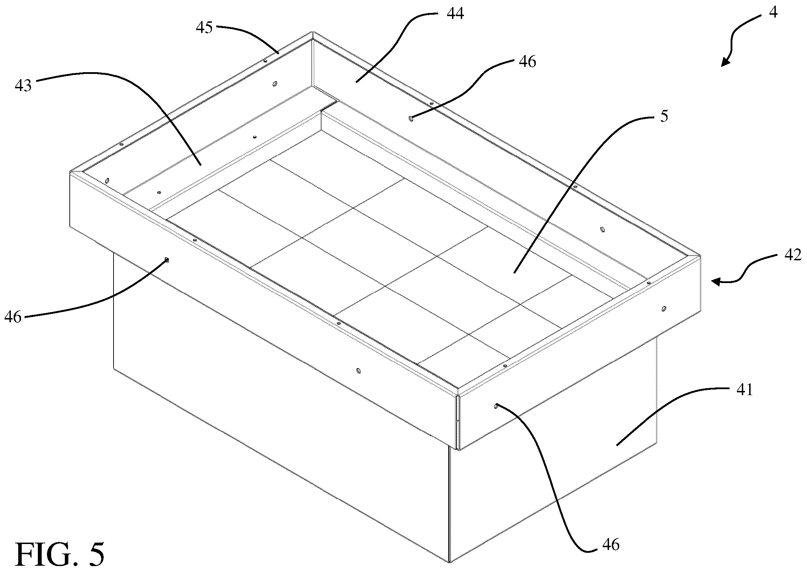

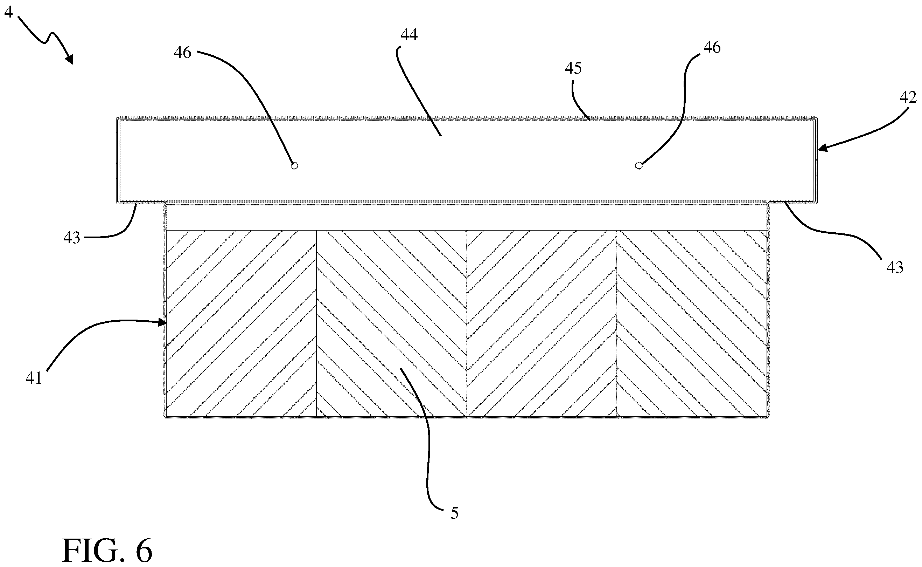

With particular reference to Figures 5 and 6, in the embodiment of the battery and ballast housing 10 illustrated, the containment tank 4 of the batteries 5 comprises a lower region 41, in which said one or more batteries 5 are housed, and an upper delimiting frame 42.

As apparent from the aforementioned Figures, in this embodiment of the containment tank 4, the lower region 41 for housing the batteries 5 has dimensions, in length and width, which are smaller than the corresponding dimensions, in length and width, of the upper delimiting frame 42 of the containment tank 4.

In particular, with reference also to figures 1-4, the dimensions, in length and width, of the upper delimiting frame 42 of the containment tank 4 are substantially equal to the corresponding internal dimensions, in length and width, of the upper portion of the containment structure 1, so that when the battery containment tank 4 is inserted into the containment structure 1, the upper delimiting frame 42 substantially rests against the internal walls of the containment structure 1.

The lower region 41 of the containment tank 4, in which the batteries 5 are housed, has dimensions, in length and width, which are smaller than the corresponding dimensions, in length and width, of the upper delimiting frame 42.

In practice, the containment tank 4 of the batteries 5 is configured herein so that the upper delimiting frame 42 of the tank 4 substantially has the same dimensions as the internal space of the containment structure 1 of the housing 10, so as to be stably positioned inside said containment structure 1.

The lower region of the containment tank 4, in which the batteries 5 are housed, instead has dimensions substantially corresponding to the pack of new-generation batteries 5 (which are normally smaller than common lead batteries) which are housed therein, so as to ensure the stable arrangement of the batteries 5 inside the containment tank 4, without the need of battery containment shims which are necessary for the conventional-type solutions.

Conveniently, the battery and ballast housing 10 of the invention can envisage the presence of a support plane 6 for a control electronics 61 of the batteries 5. The control electronics 61 and its operating principles, as well as the connections with the forklift for powering the same and with the electric network for recharging the batteries 5, will not be described in detail, since they are normally of a known type and in any case they can be of any type depending on requirements.

In the embodiment of the battery and ballast housing 10 of the attached Figures, the upper delimiting frame 42 of the containment tank 4 of the batteries 5 comprises a substantially horizontal plane 43 developing along the entire perimeter of the lower region 41 of the containment tank 4 in a direction substantially perpendicular to the walls of said lower region 41 towards the outside of the containment tank 4.

The upper delimiting frame 42 of the containment tank 4 further comprises a substantially vertical plane 44 which is perpendicular to the horizontal plane 43 and which is connected thereto along its development. The upper end of the vertical plane 44 is delimited by a substantially continuous upper edge 45.

In these embodiments, the support plane 6 of the control electronics 61 of the batteries 5 is resting on said horizontal plane 43 and can be conveniently fixed thereto, for example through reversible fastening means, for example screws, clips, reversible snap-fit fasteners, and similar means.

In the illustrated embodiment, the containment tank 4 of the batteries 5 is made so that the upper delimiting frame 42 of the tank 4 substantially has the same dimensions as the internal space of the containment structure 1 of the housing 10. The vertical plane 44 of the upper delimiting frame 42 of the tank 4 is thereby substantially in contact with the internal walls of the containment structure 1.

As illustrated with particular reference to figure 3, it is thus possible to envisage the presence of reversible or irreversible fixing means 8, 46, for fixing the vertical plane 44 of said upper delimiting frame 42 to the side walls of said upper portion of said housing 10.

In the illustrated embodiment, the fixing means are reversible fixing means and consist of a screw 8 inserted into a hole or slot 46 formed in the vertical plane 44 of the upper delimiting frame 42 of the tank 4.

As previously explained in the general description, the fixing of the containment tank 4 of the batteries 5 to the internal walls of the containment structure 1 of the housing 10 can be achieved by means of reversible systems, such as screws or similar means, or by non-reversible systems, such as rivets or welding or similar means, depending on the access requirements to the underlying ballast 2.

In general embodiments of the battery and ballast housing 10 of the invention, it is possible to envisage the presence of a closing cover 7.

Preferably, the closing cover 7 is fixed to the substantially continuous upper edge 45 of the vertical plane 44 of the upper delimiting frame 42 of the tank 4. As previously illustrated, the containment tank 4 of the batteries 5, the batteries themselves with related control electronics 6, 61, and the closing cover 7 can thereby be formed as a single assembly. This can be done easily by inserting the batteries 5 into the relative containment tank 4 and carrying out the necessary wiring, positioning the support plane 6 and the related electronics 61 on the horizontal plane 43 and positioning the closing cover 7 on the upper edge 45 of the vertical plane 44, and inserting everything into the containment structure 1 of the housing 10, once the ballast 2 has been positioned in the lower part thereof.

From the point of view of assembly and maintenance, the operations are thus extremely simplified with respect to the known solutions.

It has therefore been shown how the battery and ballast housing 10 for forklift trucks of the invention allows to carry out the intended tasks and objects, thus obtaining a power supply and counterweight system for forklift trucks which is simpler, more practical to set up and less expensive than known solutions.

A forklift truck which comprises a battery and ballast housing 10 as described herein also forms an object of the present invention.

Based on the description provided, other features, modifications or improvements are possible and obvious to the average person skilled in the art. Such features, modifications and improvements are therefore to be considered part of the present invention. In practice, the materials used, as well as the dimensions and contingent shapes, may be any according to requirements and the state of the art.

## Claims

1. A battery and ballast housing (10) for forklift trucks comprising a containment structure (1) of substantially parallelepiped shape housing within it a ballast (2) and one or more electric batteries (5) suitable for powering a forklift truck, **characterised in that** said containment structure (1) comprises a lower portion in which said ballast (2) is positioned and an upper portion in which a containment tank (4) of said one or more batteries (5) is positioned, and further **characterised in that** said ballast (2) comprises a material selected from metal processing waste materials, preferably metal processing chips and/or welding scraps and/or general metal scrap, compressed or uncompressed, and/or semi-finished metal products, preferably metal billets or slabs.

2. A battery and ballast housing (10) for forklift trucks, according to claim 1, **characterised by** comprising a separation plane (3) between said lower portion and said upper portion of said containment structure (1), and wherein said separation plane (3) is reversibly or irreversibly fixed to said containment structure (1)

3. A battery and ballast housing (10) for forklift trucks, according to one or more of the preceding claims, **characterised in that** said containment tank (4) of said one or more batteries (5) comprises a lower region (41) housing said one or more batteries (5) and an upper delimiting frame (42).

4. A battery and ballast housing (10) for forklift trucks, according to claim 3, **characterised in that** said lower region (41) housing said one or more batteries (5) has dimensions, in length and width, smaller than the corresponding dimensions, in length and width, of said upper delimiting frame (42).

5. A battery and ballast housing (10) for forklift trucks, according to claim 3 or 4, **characterised in that** the dimensions, in length and width, of said upper deliming frame (42) are substantially equal to the corresponding internal dimensions, in length and width, of the upper portion of said containment structure (1), and **in that** said lower region (41) housing said one or more batteries (5) has dimensions, in length and width, smaller than the corresponding dimensions, in length and width, of said upper delimiting frame (42).

6. A battery and ballast housing (10) for forklift trucks, according to one or more of the preceding claims, **characterised by** comprising a support plane (6) of a control electronics (61) of said one or more batteries (5).

7. A battery and ballast housing (10) for forklift trucks, according to claim 6 and one or more of claims 3 to 5, **characterised in that** said upper delimiting frame (42) comprises:
a horizontal plane (43) extending along the perimeter of said lower region (41) housing said one or more batteries (5) perpendicularly to the walls of said lower region (41);
and a vertical plane (44) perpendicular to said horizontal plane (43) and connected thereto along its extension, said support plane (6) of a control electronics (61) of said one or more batteries (5) being fixed on said horizontal plane (43).

8. A battery and ballast housing (10) for forklift trucks, according to claim 7, **characterised by** comprising reversible or irreversible fixing means (8, 46) for fixing the vertical plane (44) of said upper delimiting frame (42) to the side walls of said upper portion of said battery and ballast housing (10).

9. A battery and ballast housing (10) for forklift trucks, according to one or more of the preceding claims, **characterised by** comprising a closing cover (7)

10. A forklift truck comprising a battery and ballast housing (10) according to one or more of the preceding claims.
